# EUROPÄISCHE PATENTSCHRIFT

(11) **EP 1 149 458 B1**
(45) Veröffentlichungstag und Bekanntmachung des Hinweises auf die Patenterteilung: **10.08.2005**
(21) Anmeldenummer: 99945929.0
(22) Anmeldetag: 06.07.1999
(51) Int. Cl.: H02K 7/12, F16D 49/00, F16D 59/02

(54) **ELEKTROMOTOR MIT ELEKTROMAGNETISCHER BREMSE**
ELECTRIC MOTOR WITH ELECTROMAGNETIC BRAKE
MOTEUR ELECTRIQUE POURVU D'UN FREIN ELECTROMAGNETIQUE

(30) Priorität: 28.12.1998 DE 19860396
(43) Veröffentlichungstag der Anmeldung: 31.10.2001
(73) Patentinhaber: ROBERT BOSCH GMBH, 70442 Stuttgart (DE)
(72) Erfinder: HABELE, Michael, D-71111 Waldenbuch (DE); KRAEMER, Gerhard, D-72631 Aichtal (DE); ODENDAHL, Alfred, D-71111 Waldenbuch (DE)
(86) Internationale Anmeldenummer: PCT/DE1999/002091
(87) Internationale Veröffentlichungsnummer: WO 2000/039912

(56) Entgegenhaltungen:
- CH-A- 489 136
- DE-C- 847 933
- FR-A- 1 098 914
- GB-A- 419 835
- GB-A- 920 485
- US-A- 2 923 830

## Beschreibung

### Stand der Technik

Die Erfindung geht aus von einem Elektromotor mit elektromagnetischer Bremseinrichtung nach dem Oberbegriff des Anspruchs 1. Es ist schon ein Elektromotor mit elektromagnetischer Bremse bekannt (GB 920,485), der einen Stator mit zwei Polen hat, die jeweils einen nach innen vorspringenden Polschuh aufweist, welcher von einer Ständerwicklung umgeben ist. Die Bremseinrichtung umfasst ein Bremselement zum Abbremsen des Rotors des Elektromotors, das symmetrisch innerhalb jeweils eines Poles angeordnet ist und das mittig mit einer Bremskraft beaufschlagt ist. Durch das magnetische Feld der Ständerwicklung ist das Bremselement entgegen der Bremskraft verstellbar. Nachteilig ist, dass die Anordnung des Bremselements innerhalb des Poles keine hohen Ausrückkräfte zulässt, so dass das Bremselement nur mit einer relativ geringen Bremskraft beaufschlagt werden kann. Die maximal erzielbare Bremswirkung der Bremseinrichtung ist daher nur gering, so dass die Bremseinrichtung für eine Anwendung beispielsweise bei Winkelschleifern nicht geeignet ist.

Aus der FR-A-1 098 914 ist ein Elektromotor mit elektromagnetischer Bremse bekannt, wobei der Stator des Motors einen Pol mit zwei den Rotor umgreifenden Armen aufweist. Einer der beiden Arme des Stators ist um eine parallel zur Rotorachse orientierte Achse schwenkbar gelagert. Dieser Arm bildet somit einen schwenkbaren Hebel, wobei eine der beiden Hebelarme mit einer Bremskraft in Form einer Feder beaufschlagt ist und der andere Hebelarm mit einem Bremsbelag versehen ist. Zwischen dem als Hebel ausgebildeten Arm des Stators und dem feststehenden Teil des Stators gibt es eine einzige Anschlagfläche, in der beide Teile bei eingeschaltetem Motor aufeinander treffen. Für das dem feststehenden Teil des Stators entfernt liegende Ende des Stator-Arms gibt es keinen Anschlag. Das gleiche gilt für eine elektromagnetische Brems bei einem Elektromotor gemäß DE 847 933 C. Hier besteht die Bremse aus einem als Wippe ausgebildeten Arm des Stators. Dieser schwenkbare Arm hat nur eine Auflagefläche am feststehenden Teil des Stators, nämlich dort, wo sich der Bremsbelag befindet.

### Vorteile der Erfindung

Der erfindungsgemäße Elektromotor mit elektromagnetischer Bremseinrichtung hat den Vorteil, eine hohe Ausrückkraft zu gewährleisten, so daß eine hohe Bremskraft mit entsprechend guter Bremswirkung erzielbar ist. Indem das Bremselement als Wippe ausgebildet ist, auf die die Bremskraft außerhalb ihrer Schwenkachse einwirkt, läßt sich die Höhe der Ausrückkraft erheblich steigern. Die Bremseinrichtung ist damit wesentlich wirkungsvoller und auch für den Einsatz bei Winkelschleifern geeignet.

Durch die in den abhängigen Ansprüchen aufgeführten Maßnahmen sind vorteilhafte Weiterbildungen und Verbesserungen des erfindungsgemäßen Elektromotors möglich.

### Zeichnung

Ein Ausführungsbeispiel der Erfindung ist in der Zeichnung dargestellt und in der nachfolgenden Beschreibung näher erläutert. Es zeigen
- Figur 1: einen Teilschnitt durch einen erfindungsgemäßen Elektromotor,
- Figur 2: einen Schnitt durch eine Statorhälfte ohne ein darin einzusetzendes Bremselement und
- Figur 3: eine Draufsicht auf ein Statorpaket des Elektromotors.

### Beschreibung des Ausführungsbeispiels

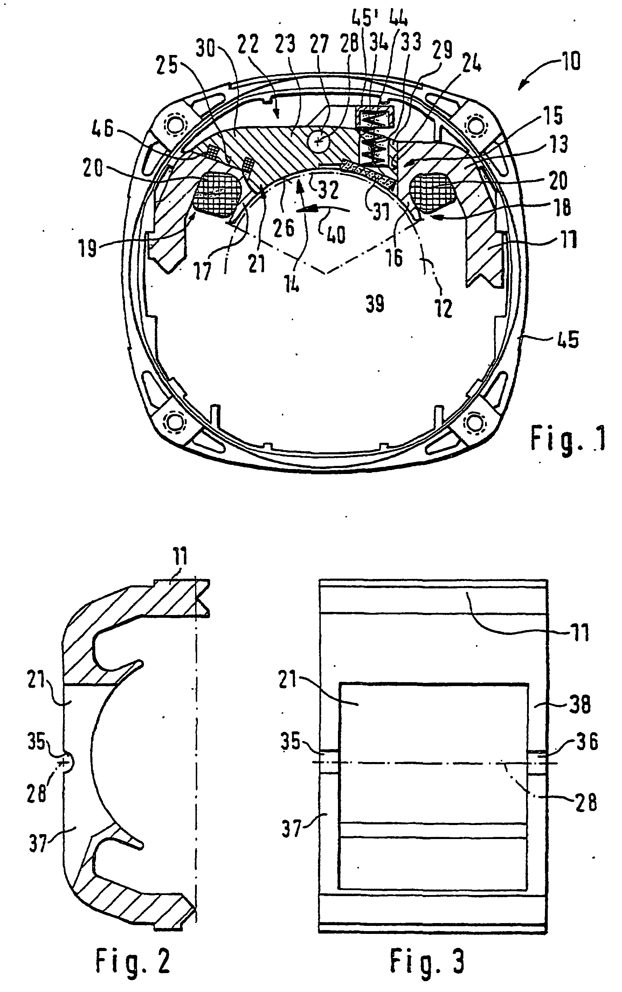

In Figur 1 ist mit 10 ein Elektromotor bezeichnet, der einen Stator 11 und einen Rotor 12 hat. Der Stator 11, von dem lediglich eine obere Hälfte dargestellt ist, bildet ein Polpaar, von dem ein Pol mit 14 bezeichnet ist. Der Pol 14 weist einen vom Joch 13 nach innen zum Rotorumfang gerichteten Polschuh 15 auf, der beiderseits in Polhörnern 16, 17 ausläuft. Zwischen den Polhörnern 16, 17 und dem Joch 13 sind Ausnehmungen 18, 19 gebildet, in die eine Ständerwicklung 20 eingreift. Die Ständerwicklung 20 umgibt somit den Polschuh 15.

Im Stator 11 ist im Bereich des Polschuhs 15 ein radial durchgehender Freiraum 21 gebildet, in den ein Bremselement 23 einer Bremseinrichtung 22 eingesetzt ist. Das Bremselement 23 füllt einen inneren Teil des Polschuhs 15 zwischen den Polhörneren 16, 17 aus. Das Bremselement 23 bildet seitliche, gegenüber dem Stator 11 radial durchgehende Trennflächen 24, 25 sowie eine dem Rotor 12 zugewandte Polfläche 26. Das Bremselement 23 ist aus magnetisch leitendem Material ausgebildet, so daß in den Trennflächen 24, 25 und in der Polfläche 26 ein Übergang des von der Ständerwicklung 20 im Stator 11 und im Bremselement 23 induzierten magnetischen Flußes stattfindet.

Das Bremselement 23 ist als Wippe ausgebildet, die auf einander abgewandten Seiten je einen seitlich hervorstehenden Zapfen 27 hat. Die Zapfen 27 bilden dabei eine Schwenkachse 28, um die das Bremselement 23 gegenüber dem Stator 11 in Grenzen schwenkbar gelagert ist. Das Bremselement 23 ist als mehrarmiger Hebel mit zu beiden Seiten der Schwenkachse 28 angeordneten Hebelarmen 29, 30 ausgebildet. Die Hebelarme 29, 30 liegen etwa in einem Winkel von 180° zueinander, wobei das Bremselement 23 etwa an die Ringstruktur des Jochs 13 angepaßt ist. Ein erster der Hebelarme 29, 30 bildet einen Bremsarm 29, der auf seiner dem Rotor 12 zugewandten Innenseite einen Bremsbelag 31 trägt. Der Bremsbelag 31 ist vorzugsweise aus einem Material mit keiner bzw. geringer magnetischer Leitfähigkeit hergestellt. Ein zweiter der Hebelarme 29, 30 ist als Ausrückarm 30 ausgebildet und bildet im Bereich der Polfläche 26 einen engen Ringspalt 32 mit dem Rotor 12, der dem üblichen Motorluftspalt entspricht.

Eine Druckfeder 34 beaufschlagt den Bremsarm 29 mit einer Bremskraft 33 in Richtung auf den Rotor 12. Das Bremselement 23 ist somit außerhalb der Schwenkachse 28, d.h. außermittig mit der Bremskraft 33 beaufschlagt, wodurch ein Bremsmoment um die Schwenkachse 28 erzeugt wird. Die Schwenkachse 28 liegt dabei parallel zu einer Drehachse 39 des Rotors 12. Der Bremsarm 29 weist eine Mehrzahl Sacklöcher 44 auf, die zur Aufnahme jeweils einer Druckfeder 34 dienen. Die Druckfedern 34 sind andererseits an einem am Stator 11 befestigten Gegenhalter 45' abgestützt.

Der Bremsarm 29 ist in einer durch einen Pfeil 40 bezeichneten Drehrichtung des Rotors 12 gesehen vor der Schwenkachse 28 angeordnet, wohingegen der Ausrückarm 30 hinter der Schwenkachse 28 liegt. Dadurch kann die Bremswirkung durch Kraftverstärkung zusätzlich gesteigert werden, indem ein Kräftepaar aus Reibkraft und Lagerreaktionskraft ein Drehmoment um die Schwenkachse 28 in Richtung der Bremskraft 33 bildet.

Wird der Elektromotor 10 eingeschaltet, d.h. die Ständerwicklung 20 bestromt, wird im Stator 11 ein magnetischer Fluß induziert, der in der Trennfläche 25 zum Stator 11 hin und in der Polfläche 26 zum Rotor 12 hin eine Anziehungskraft auf das Bremselement 23 erzeugt. Diese Anziehungkraft bewirkt ein dem Bremsmoment entgegengerichtetes, betragsmäßig höheres Ausrückmoment, das eine Ausrückbewegung des Bremselementes 23 entgegen dem Bremsmoment bewirkt. In den Trennflächen 24, 25 liegt hierzu ein ausreichendes Bewegungsspiel vor, das es dem Bremselement 23 ermöglicht, gegenüber dem Stator 11 eine begrenzte Schwenkbewegung um die Schwenkachse 28 durchzuführen, wobei der Bremsbelag 31 dann vom Rotor 12 abgehoben wird. Die Trennfläche 25 am Ausrückarm 30 hat einen größeren Radialabstand von der Schwenkachse 28 als die Trennfläche 24 am Bremsarm 29, so daß die in der Trennfläche 24 wirkende Anziehungkraft einen besonders hohen Beitrag zum Ausrückmoment leistet. Da der Bremsarm 29 im Bereich der Polfläche 26 einen größeren Abstand vom Rotor 12 hat als der Ausrückarm 30 und da der Bremsarm 29 dort den unmagnetischen Bremsbelag 31 trägt, sind an dieser Stelle im Gegensatz zum Ausrückarm 30 keine nennenswerten Anziehungskräfte vorhanden.

Um ein frequenzbedingtes Vibrieren der Bremseinrichtung 22 bei bestromter Ständerwicklung 20 zu verhindern, befindet sich im Ausrückarm 30 eine Kurzschlußwindung 46 in unmittelbarer Nähe zu der Trennfläche 25.

Wird der Elektromotor 10 wieder ausgeschaltet, läßt die magnetische Wirkung der Ständerwicklung 20 nach, so daß die Anziehungskraft am Ausrückarm 30 in der Trennebene 25 und in der Polfläche 26 ebenfalls nachläßt. Das Bremsmoment überwiegt dann wieder, so daß der Bremsarm 29 von der Druckfeder 34 gegen den Rotor 12 gepreßt wird, was zu einer Abbremsung des Rotors 12 führt. Die Bremseinrichtung 22 löst daher mit Abschalten des Elektromotors 10 automatisch aus, so daß beispielsweise bei einem Winkelschleifer das Auslaufen der Trennscheibe nach Abschalten des Motors schon nach kurzer Zeit selbsttätig gestoppt wird.

Der in Figur 1 nur halbseitig dargestellte Stator 11 hat in der nicht dargestellten unteren Bildhälfte einen weiteren Pol, der mit oder ohne eine der Bremseinrichtung 22 entsprechenden Bremse versehen sein kann. Durch Vorsehen einer weiteren Bremse im zweiten Pol kann die Bremswirkung noch weiter gesteigert werden. In jedem Falle ist dort der Stator 11 etwa ringförmig geschlossen.

In Figur 2 ist die obere Hälfte des Stators 11 aus Figur 1 ohne das darin einzusetzende Bremselement 23 dargestellt. Man erkennt, daß der Freiraum 21 axial nicht durchgehend ausgebildet ist, sondern axial von je einem Steg 37, 38 mit durchgehendem Statormaterial begrenzt ist. Der Freiraum 21 ist somit fensterförmig ausgebildet, was in Figur 3 dargestellt ist. Die Stege 37, 38 sind jeweils mit halbkreisförmigen Ausnehmungen 35, 36 versehen, die als Auflager für die Zapfen 21 dienen. Auf diese Weise wird die Schwenkachse 28 gebildet.

Die Erfindung ist nicht auf das gezeigte Ausführungsbeispiel beschränkt. So kann die erfindungsgemäße Bremseinrichtung auch bei mehr als zweipoligen Elektromotoren eingesetzt werden. Die Bremskraft kann auch unmittelbar am Bremsbelag bzw. an einem diesen tragenden Bauteil angreifen, wobei das Bremselement dann als Ausrückwippe dient, die mit dem Bremsbelag bzw. dem diesen tragenden Bauteil gekuppelt ist. Die Druckfedern können auch durch ein oder mehrere Blattfederbleche gebildet werden, die im Polschuh 15 bzw. am Stator 11 befestigt sind und die nötige Bremskraft erzeugen.

## Patentansprüche

1. Elektromotor mit elektromagnetischer Bremse, insbesondere für einen Winkelschleifer, mit einem Stator (11), der wenigstens ein Polpaar (14) hat, dessen wenigstens einer Pol (14) einen nach innen zum Rotorumfang gerichteten Polschuh (15) aufweist und von einer Ständerwicklung (20) umgeben ist, wobei der Pol (14) eine Bremseinrichtung (22) zum Abbremsen eines Rotors (12) aufnimmt, die ein Bremselement .(23) umfasst, das durch das magnetische Feld der Ständerwicklung (20) entgegen einer Bremskraft (33) verstellbar ist, **dadurch gekennzeichnet, dass** das Bremselement (23) als Wippe ausgebildet ist, die innerhalb eines radial durchgehenden Freiraums (21) im Stator (11) um eine Schwenkachse (28) bewegbar gelagert ist, dass das Bremselement (23) als mehrarmiger Hebel mit einem Bremsarm (29) und einem Ausrückarm (30) gebildet ist, wobei der Bremsarm (29) mit einer Bremskraft beaufschlagt ist und der Ausrückarm (30) bei bestromter Ständerwicklung (20) eine der Bremskraft entgegengerichtete Ausrückkraft auf das Bremselement (23) ausübt, und dass im Ausrückarm (30) eine Kurzschlusswicklung integriert ist.

2. Elektromotor nach Anspruch 1, **dadurch gekennzeichnet, dass** der Freiraum (21) axial jeweils von einem Steg (37, 38) begrenzt ist.

3. Elektromotor nach Anspruch 1 oder 2, **dadurch gekennzeichnet, dass** das Bremselement (23) seitlich mit je einem Zapfen (27) versehen ist, der jeweils in Ausnehmungen (35, 36) der Stege (37, 38) eingreift und die Schwenkachse (28) bildet.

4. Elektromotor nach Anspruch 1 oder 3, **dadurch gekennzeichnet, dass** die Schwenkachse (28) parallel zu einer Drehachse (39) des Rotors (12) liegt.

5. Elektromotor nach einem der vorhergehenden Ansprüche, **dadurch gekennzeichnet, dass** das Bremselement (23) aus magnetisch gut leitendem Material besteht und eine dem Rotor (12) zugewandte Polfläche (26) sowie dem Stator (11) zugewandte Trennflächen (24, 25) bildet.

6. Elektromotor nach Anspruch 1, **dadurch gekennzeichnet, dass** der Bremsarm (29) auf einer dem Rotor (12) zugewandten Innenseite mit einem Bremsbelag (31) versehen ist.

7. Elektromotor nach Anspruch 5, **dadurch gekennzeichnet, dass** die Trennfläche (25) am Ausrückarm (30) einen größeren Radialabstand von der Schwenkachse (28) hat als die Trennfläche (24) am Bremsarm (29).

8. Elektromotor nach Anspruch 1, **dadurch gekennzeichnet, dass** der Ausrückarm (30) im Bereich der Polfläche (26) einen Ringspalt (32) mit dem Rotor (12) bildet, der dem üblichen Motorluftspalt entspricht.

9. Elektromotor nach einem der Ansprüche 1 bis 8, **dadurch gekennzeichnet, dass** der Bremsarm (29) in Drehrichtung (40) des Rotors (12) gesehen vor der Schwenkachse (28) angeordnet ist, wohingegen der Ausrückarm (30) hinter der Schwenkachse (28) liegt.

10. Elektromotor nach Anspruch 6, **dadurch gekennzeichnet, dass** der Bremsbelag (31) keine bzw. nur eine geringe magnetische Leitfähigkeit aufweist.

11. Elektromotor nach Anspruch 1, **dadurch gekennzeichnet, dass** der Bremsarm (29) eine Mehrzahl Sacklöcher (41) hat, die zur Aufnahme jeweils einer Druckfeder (34) dienen.

12. Elektromotor nach Anspruch 1, **dadurch gekennzeichnet, dass** die Druckfeder (34) andererseits an einem am Stator (11) befestigten Gegenhalter (45') abgestützt ist.

13. Elektromotor nach einem der vorhergehenden Ansprüche, **dadurch gekennzeichnet, dass** der Elektromotor (10) ein Polpaar aus zwei Polen (14) hat, die beide eine Bremseinrichtung (22) aufnehmen.

## Claims

1. Electric motor with an electromagnetic brake, in particular for an angle grinder, having a stator (11) which has at least one pair of poles (14), of which at least one pole (14) has a pole shoe (15) which faces inwards towards the circumference of the rotor and is surrounded by a stator winding (20), the pole (14) accommodating a braking device (22) for braking a rotor (12), this braking device comprising a braking element (23) whose braking force (33) can be adjusted by the magnetic field of the stator winding (20), **characterized in that** the braking element (23) is in the form of a rocker which is mounted within a radially continuous free space (21) in the stator (11) such that it can move about a pivot axis (28), **in that** the braking element (23) is in the form of a multi-armed lever having one braking arm (29) and one disengagement arm (30), a braking force being applied to the braking arm (29), and the disengagement arm (30) exerting on the braking element (23) a disengagement force in the opposite direction to the braking force when power is supplied to the stator winding (20), and **in that** a squirrel-cage winding is integrated in the disengagement arm (30).

2. Electric motor according to Claim 1, **characterized in that** the free space (21) is axially bounded by a web (37, 38) in each case.

3. Electric motor according to Claim 1 or 2, **characterized in that** the sides of the braking element (23) are provided with a respective pin (27) which in each case engages in recesses (35, 36) in the webs (37, 38) and forms the pivot axis (28).

4. Electric motor according to Claim 1 or 3, **characterized in that** the pivot axis (28) is parallel to an axis of rotation (39) of the rotor (12).

5. Electric motor according to one of the preceding claims, **characterized in that** the braking element (23) is composed of a highly magnetically permeable material and forms a pole face (26) which faces the rotor (12), and separating surfaces (24, 25) which face the stator (11).

6. Electric motor according to Claim 1, **characterized in that** the braking arm (29) is provided with a brake lining (31) on an inner face which faces the rotor (12).

7. Electric motor according to Claim 5, **characterized in that** the separating surface (25) on the disengagement arm (30) is at a larger radial distance from the pivot axis (28) than the separating surface (24) on the braking arm (29).

8. Electric motor according to Claim 1, **characterized in that** the disengagement arm (30) forms an annular gap (32) with the rotor (12) in the region of the pole face (26), the said annular gap corresponding to the customary motor air gap.

9. Electric motor according to one of Claims 1 to 8, **characterized in that** the braking arm (29) is arranged in front of the pivot axis (28), as seen in the direction of rotation (40) of the rotor (12), whereas the disengagement arm (30) is behind the pivot axis (28).

10. Electric motor according to Claim 6, **characterized in that** the brake lining (31) is not, or only slightly, magnetically permeable.

11. Electric motor according to Claim 1, **characterized in that** the braking arm (29) has a plurality of blind holes (41) which in each case serve to accommodate a compression spring (34).

12. Electric motor according to Claim 1, **characterized in that** the other end of the compression spring (34) is supported against a mating holder (45') mounted on the stator (11).

13. Electric motor according to one of the preceding claims, **characterized in that** the electric motor (10) has a pair of poles comprising two poles (14) which both accommodate a braking device (22).

## Revendications

1. Moteur électrique à frein électromagnétique, en particulier pour meuleuse d'angle, comprenant un stator (11) qui possède au moins une paire de pôles (14) dont au moins un pôle (14) présente un patin polaire (15) dirigé vers l'intérieur en direction de la périphérie du rotor, et est entouré d'un enroulement statorique (20), le pôle (14) portant un dispositif de freinage (22) qui pour freiner un rotor (12) comprend un élément de frein (23) que le champ magnétique de l'enroulement statorique (20) peut déplacer contre d'une force de freinage (33),
**caractérisé en ce que**
l'élément de frein (23) est formé d'une bascule montée mobile autour d'un axe de pivotement (28) à l'intérieur d'un espace libre (21) ménagé dans le stator (11) et qui le traverse radialement, l'élément de frein (23) est constitué par un levier à plusieurs bras possédant un bras de freinage (29) et un bras de déclenchement (30), le bras de freinage (29) étant sollicité par une force de freinage et le bras de déclenchement (30) exerçant sur l'élément de frein (23) une force de déclenchement en sens inverse de la force de freinage lorsque l'enroulement statorique (1) est parcouru par le courant, et un enroulement en court-circuit est intégré dans le bras de déclenchement (30).

2. Moteur électrique selon la revendication 1,
**caractérisé en ce que**
l'espace libre (21) est limité axialement par une nervure (37, 38) à chaque extrémité.

3. Moteur électrique selon la revendication 1 ou 2,
**caractérisé en ce que**
de chaque côté, l'élément de frein (23) est muni d'un tourillon (27) engagé dans l'un des évidements (35, 36) des nervures (37, 38) et qui forme l'axe de pivotement (28).

4. Moteur électrique selon la revendication 1 ou 3,
**caractérisé en ce que**
l'axe de pivotement (28) s'étend parallèlement à un axe de rotation (39) du rotor (12).

5. Moteur électrique selon une des revendications précédentes,
**caractérisé en ce que**
l'élément de frein (23) est composé d'une matière hautement magnéto-conductrice, et forme une surface polaire (26) dirigée vers le rotor (12) ainsi que des surfaces de joint (24, 25) dirigées vers le stator (11).

6. Moteur électrique selon la revendication 1,
**caractérisé en ce que**
le bras de freinage (29) est muni d'une garniture de frein (31) sur un côté intérieur dirigé vers le rotor (12).

7. Moteur électrique selon la revendication 5,
**caractérisé en ce que**
la surface de joint (25) du bras de déclenchement (30) se trouve à une plus grande distance radiale de l'axe de pivotement (28) que la surface de joint (24) du bras de freinage (29).

8. Moteur électrique selon la revendication 1,
**caractérisé en ce que**,
dans la région de la surface polaire (26), le bras de déclenchement (30) forme avec le rotor (12) une fente annulaire (32) qui correspond à l'entrefer habituel du moteur.

9. Moteur électrique selon une des revendications 1 à 8,
**caractérisé en ce que**
vu dans le sens de la rotation (40) du rotor (12), le bras de freinage (29) est disposé en amont de l'axe de pivotement (28), tandis que le bras de déclenchement (30) est situé en aval de l'axe de pivotement (28).

10. Moteur électrique selon la revendication 6,
**caractérisé en ce que**
la garniture de frein (31) présente une conductibilité magnétique nulle ou seulement faible.

11. Moteur électrique selon la revendication 1,
**caractérisé en ce que**
le bras de freinage (29) présente une pluralité de trous borgnes (41) qui servent à recevoir chacun un ressort de compression (34).

12. Moteur électrique selon la revendication 1,
**caractérisé en ce que**,
de l'autre côté, les ressorts de compression (34) sont appuyés contre une butée de retenue (45') fixée au stator (11).

13. Moteur électrique selon une des revendications précédentes,
**caractérisé en ce que**
le moteur électrique (10) a une paire de pôles composée de deux pôles (14) qui reçoivent tous deux un dispositif de freinage (22).
